# EUROPÄISCHE PATENTSCHRIFT

(11) **EP 3 390 813 B1**
(45) Veröffentlichungstag und Bekanntmachung des Hinweises auf die Patenterteilung: **05.01.2022**
(21) Anmeldenummer: 16809034.8
(22) Anmeldetag: 09.12.2016
(51) Int. Cl.: F03D 7/02, F03D 7/04

(54) **VERFAHREN ZUM STEUERN EINER WINDENERGIEANLAGE**
METHOD FOR CONTROLLING A WIND TURBINE
PROCÉDÉ DE COMMANDE D'UNE ÉOLIENNE

(30) Priorität: 17.12.2015 DE 102015122039
(43) Veröffentlichungstag der Anmeldung: 24.10.2018
(73) Patentinhaber: Wobben Properties GmbH, 26607 Aurich (DE)
(72) Erfinder: DE BOER, Wolfgang, 26802 Moormerland (DE)
(74) Vertreter: Eisenführ Speiser
(86) Internationale Anmeldenummer: PCT/EP2016/080366
(87) Internationale Veröffentlichungsnummer: WO 2017/102570

(56) Entgegenhaltungen:
- EP-A1- 2 022 981
- EP-A1- 2 251 543
- EP-A1- 2 757 251
- EP-A2- 2 481 921

## Beschreibung

Die vorliegende Erfindung betrifft ein Verfahren zum Steuern einer Windenergieanlage mit verstellbaren Rotorblättern. Außerdem betrifft die vorliegende Erfindung eine entsprechende Windenergieanlage mit einem solchen Verfahren zum Steuern.

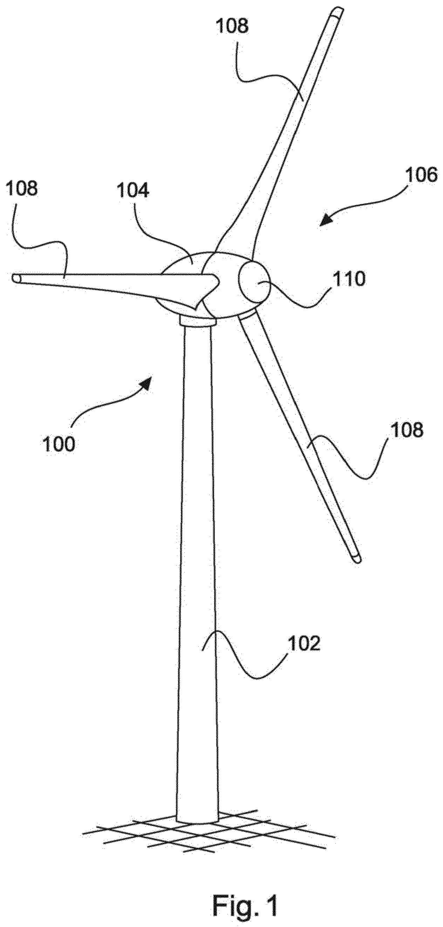

Windenergieanlagen, besonders solche, wie in Figur 1 gezeigt, weisen häufig Rotorblätter mit verstellbarem Blattwinkel auf. Die Steuerung einer solchen Windenergieanlage beinhaltet regelmäßig, dass zwischen einem Teillastbetrieb und einem Volllastbetrieb unterschieden wird. Im Teillastbetrieb wird die Windenergieanlage regelmäßig bis zu einer Nennwindgeschwindigkeit betrieben, wobei die Rotorblätter dabei einen festen Blattwinkel aufweisen, der hier auch als Teillastwinkel bezeichnet wird.

Hat die Windgeschwindigkeit Nennwindgeschwindigkeit erreicht und steigt weiter an, werden die Rotorblätter nach und nach in ihrem Anstellwinkel verstellt, nämlich aus dem Wind gedreht, um eine zu starke Belastung der Windenergieanlage zu vermeiden. Dieser Betrieb ab Nennwindgeschwindigkeit wird auch als Volllastbetrieb bezeichnet und hier wird versucht, die Drehzahl auf Nenndrehzahl zu halten und die abgegebene Leistung auf Nennleistung zu halten. Weder Drehzahl noch Leistung sollen über diese Werte ansteigen, allenfalls um geringe Werte.

So sorgt eine Regelung dafür, dass die Drehzahl ungefähr diesen Nenndrehzahlwert beibehält. Grundsätzlich kann statt Nenndrehzahl oder Nennleistung auch ein anderer Wert zugrunde gelegt werden, was aber unüblich ist.

Jedenfalls wird hier, vereinfacht ausgedrückt, eine Drehzahlregelung so ausgeführt, dass bei steigendem Wind die Blätter weiter aus dem Wind gedreht werden, um dadurch die Drehzahl auf ihren Wert halten zu können. Fällt der Wind wieder ab, werden die Blätter entsprechend wieder in den Wind gedreht.

Sollte diese Regelung aus irgendeinem Grunde versagen, so dass bei steigendem Wind die Blätter nicht aus dem Wind gedreht werden, kann die Drehzahl auf einen unerwünscht hohen Wert ansteigen. Um die Windenergieanlage vor einer solchen Überdrehzahl zu schützen, ist eine Notabschaltung vorgesehen, bei der die Windenergieanlage beim Überschreiten eines entsprechenden Überdrehzahlwertes abschaltet. Die Rotorblätter werden dann auch mit einer Notverstellung in Fahnenstellung gedreht.

Nachteilig hierbei ist, dass diese Überdrehzahlgrenze häufig aus Sicherheitsgründen nur wenig oberhalb der Nenndrehzahl liegt und es somit vorkommen kann, dass die Regelung die Rotorblätter nicht schnell genug aus dem Wind drehen kann, so dass diese Notabschaltung anspricht, obwohl kein Notfall vorliegt, weil die Drehzahlregelung grundsätzlich einwandfrei funktioniert, nur in dem besonderen Fall nicht schnell genug sein konnte. Eine Gefährdung der Windenergieanlage liegt dabei nicht vor, weil ein kurzzeitiges Überschreiten dieser Überdrehzahlgrenze unkritisch ist. Problematisch wird nur ein starkes und/oder lang anhaltendes Überschreiten einer solchen Überdrehzahlgrenze.

Die EP 2 757 251 A1 beschreibt ein Verfahren zum Steuern einer Windenergieanlage, bei der der Pitchwinkel der Rotorblätter veränderbar ist. Bei dem bekannten Verfahren wird das Blattspitzengeschwindigkeitsverhältnis ständig überwacht und für jedes Blattspitzengeschwindigkeitsverhältnis wird ein kritischer Pitchwinkel ermittelt, bei dem an dem Rotorblatt eine unerwünschte Strömungsablösung auftreten kann. Um das zu vermeiden, wird ein minimaler Blattwinkel festgelegt, der im Betrieb nicht unterschritten werden darf und der größer ist als der für ein bestimmtes Blattspitzengeschwindigkeitsverhältnis ermittelte kritische Pitchwinkel.

Das Deutsche Patent- und Markenamt hat in der Prioritätsanmeldung zu vorliegender Anmeldung folgenden Stand der Technik recherchiert: US 2009/0047116 A1, EP 1 299 779 B1, EP 2 583 125 B1, EP 3 029 318 A1 und WO 2008/086608 A1.

Der vorliegenden Erfindung liegt somit die Aufgabe zugrunde, dieses Problem zu adressieren. Insbesondere soll eine Lösung vorgeschlagen werden, bei der verhindert wird, dass die Überdrehzahlgrenze überschritten wird, obwohl kein Störfall vorliegt. zumindest soll gegenüber bisher Bekanntem eine alternative Lösung vorgeschlagen werden.

Erfindungsgemäß wird ein Verfahren nach Anspruch 1 vorgeschlagen. Demnach wird ein Verfahren zum Steuern einer Windenergieanlage mit Rotorblättern mit verstellbarem Blattwinkel vorausgesetzt. Die Windenergieanlage wird in bekannter Art und Weise in einem Teillastbetrieb für Windgeschwindigkeiten bis zu einer Nennwindgeschwindigkeit betrieben. Für Windgeschwindigkeiten oberhalb der Nennwindgeschwindigkeit wird die Windenergieanlage in einem Volllastbetrieb betrieben, wobei im Volllastbetrieb der Blattwinkel mit zunehmender Windgeschwindigkeit vergrößert wird, nämlich in Richtung zur Fahnenstellung verstellt wird.

Es wird nun ein Grenzwinkel als minimaler Wert des Blattwinkels festgelegt und die Windenergieanlage wird so gesteuert, dass der Grenzwinkel maximal um einen vorbestimmten Differenzwinkel unterschritten wird. Je nachdem, wie der Grenzwinkel festgelegt wird, kann dieser vorbestimmte Differenzwinkel auch den Wert Null betragen. Der Grenzwinkel und/oder der Differenzwinkel sind vorzugsweise zeitvariante Größen.

Der Erfindung liegt die Erkenntnis zugrunde, dass ein unerwünschtes Überschreiten eines Überdrehzahlgrenzwertes, der zum Abschalten der Windenergieanlage führt, nur in sehr speziellen Situationen auftritt. Eine solche besondere Situation ist eine, bei der ein böiger Wind vorliegt, der neben Böen auch kurze Perioden sehr schwachen Windes aufweist. Vereinfacht ausgedrückt kann bei böigem Wind zwischen zwei Böen eine temporäre Flaute oder ein Böental vorliegen. Für die Drehzahlregelung würde das bedeuten, dass in einem solchen Böental, wenn eine sehr geringe Windgeschwindigkeit vorliegt, die Blätter in den Wind verstellt werden. Dann kann auf dieses Böental folgend eine starke Böe kommen, die den Rotor beschleunigt, wobei die Rotorblätter nicht schnell genug aus dem Wind gedreht werden können, weil sie aufgrund des Böentals, also der temporär sehr geringen Windgeschwindigkeit sehr stark in den Wind gedreht waren. Bis die Rotorblätter aus dieser Position zurück gedreht werden können, kann die Drehzahl bereits den besagten Überdrehzahlgrenzwert überschritten haben, mit der Folge, dass eine Notabschaltung eingeleitet wird, die unerwünscht ist.

Es wurde auch erkannt, dass die Blattwinkelverstellung am Anfang des Volllastbetriebs, also beginnend vom Teillastwinkel aus, zunächst wenig Auswirkung hat. Es muss somit am Anfang, wenn die Windgeschwindigkeit erst nur etwas höher ist als die Nennwindgeschwindigkeit, trotzdem der Blattwinkel um recht viele Winkelgrade verstellt werden, damit sich eine nennenswerte Auswirkung einstellt, damit also die Drehzahl auf etwa Nenndrehzahl gehalten werden kann. Damit ergibt sich besonders am Anfang das Problem, dass der Blattwinkel stark verändert wird, obwohl sich die Windgeschwindigkeit nicht stark verändert hat. Es ist hier also viel Stellleistung nötig und es kann vergleichsweise lange dauern, die Verstellung durchzuführen.

Um das zu vermeiden, wird der Grenzwinkel als minimaler Wert des Blattwinkels festgelegt. Tritt nun das beschriebene Böental auf, kann der Rotorblattwinkel zunächst reduziert werden, nämlich in den Wind gedreht werden, aber nur, bis der Blattwinkel den Grenzwinkel um den vorbestimmten Differenzwinkel unterschritten hat. Eine weitere Reduzierung des Blattwinkels wird verhindert. Dadurch wird verhindert, dass sich der Blattwinkel zu stark von einem Wert entfernt, der in einer solchen böigen Windsituation möglicherweise in Kürze wieder eingenommen werden muss.

Mit anderen Worten ist der Blattwinkel bei einer Böe zunächst in der richtigen Position. Tritt nun die Flaute bzw. das Böental auf, wird der Winkel trotzdem nicht sehr weit von dieser Position, die er noch bei der Böe hatte, weggedreht. Ist das Böental nun zu Ende und tritt wieder eine starke Böe auf, so braucht der Blattwinkel nur um einen geringen Wert zu dem Winkel wieder zurückgedreht zu werden, der dieser nun wieder auftretenden Böe angemessen ist.

Durch dieses Festlegen des Grenzwinkels wird somit eine einfache pragmatische Lösung geschaffen, die ansonsten die vorhandene Drehzahlregelung, die den Blattwinkel verstellt, unverändert lässt. Es wird lediglich ein solcher Grenzwinkel angegeben, der als zusätzliche Bedingung einzuhalten ist. Der Grenzwinkel und/oder der Differenzwinkel können temporär festgelegt werden.

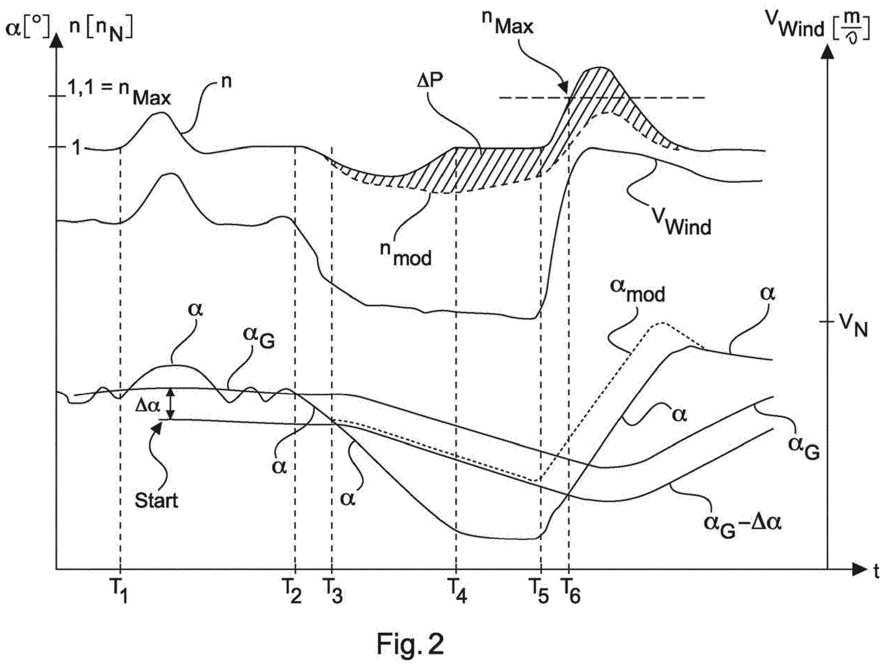

Gemäß einer Ausführungsform wird vorgeschlagen, dass das Festlegen des Grenzwinkels und außerdem oder alternativ das Steuern der Windenergieanlage so, dass der Grenzwinkel nur um einen vorbestimmten Differenzwinkel unterschritten wird, erst erfolgt, wenn wenigstens eine vorbestimmte Böenhäufigkeit und/oder eine Böigkeit des Windes festgestellt wurde. Außerdem oder alternativ kann geprüft werden, ob in einem vorbestimmten Zeitraum wenigstens einmal eine Spitzendrehzahl erfasst wird, die um mehr als einen vorbestimmten Toleranzwert oberhalb der Nenndrehzahl liegt. Im laufenden Betrieb kann die Drehzahl nicht exakt auf einem Sollwert gehalten werden und es ergeben sich kleine Schwankungen der Drehzahl um ihren Sollwert, der im Volllastbetrieb die Nenndrehzahl ist. Die hierbei kurzzeitig auftretenden höheren Drehzahlen bilden diese Spitzendrehzahlen und geben einen Hinweis auf die Böigkeit des Windes. Figur 2 zeigt nach dem Zeitpunkt T1 ein Beispiel einer solchen Spitzendrehzahl schematisch. Dieses Überprüfen der Spitzendrehzahlen ist somit eine einfache Art und Weise, die Böigkeit des Windes abzuschätzen. Es wurde nämlich erkannt, dass ein Überschreiten der Nenndrehzahl ein Indikator für die Böigkeit des Windes ist.

Das Festlegen des Grenzwinkels, oder ein entsprechendes Steuern der Windenergieanlage, unterbleibt also bei Windsituationen, die keine große Böigkeit des Windes aufweisen.

Eine Böe wird dabei wie folgt definiert.

Wenn der gemessene 1-Minuten-Mittelwert der Windgeschwindigkeit innerhalb weniger Sek, bspw. maximal 20 Sek und mindestens 3 Sek anhaltend, um mindestens 3 m/s überschritten wird. Eine Böe kann auch über einen Vergleich der aktuellen Windgeschwindigkeit mit einem 10-Minuten-Mittel vorgenommen werden, wobei ein geringeres Überschreiten, z.B. im Bereich von 1,7m/s als Böe angesehen werden kann. Entsprechend kann eine Böe festgestellt werden und damit ist es auch möglich, Böen zu zählen und somit ihre Häufigkeit, also Vorkommen pro Zeitintervall zu bestimmen.

Eine Böenhäufigkeit ist daher ein Maß, das angibt, wie oft eine Böe in einem vorbestimmten Zeitintervall auftritt. Eine Böigkeit gibt an, wie groß der Anteil von Böen in dem vorherrschenden Wind ist.

Die Drehzahlregelung bleibt dadurch für den Großteil ihrer Anwendung, also immer dann, wenn keine große Böigkeit des Windes vorliegt, von dieser erfindungsgemäßen Lösung unbeeinflusst. Erst wenn eine Böigkeit festgestellt wird, wird ein solcher Grenzwinkel festgelegt oder wird die entsprechende Steuerung durchgeführt. Insoweit kommen zwei Möglichkeiten in Betracht, diese vorgeschlagene Lösung nur bei Böigkeit des Windes zu aktivieren. Die eine Möglichkeit besteht darin, erst dann überhaupt einen Grenzwinkel festzulegen. Es könnte also vorher ein Grenzwinkel angesetzt werden, der nie zum Tragen kommt, weil er beispielsweise einen hohen negativen Wert aufweist. Außerdem oder alternativ kann einfach abhängig von der Böigkeit die Steuerung aktiviert bzw. wieder deaktiviert werden. In diesem Fall könnte ein Grenzwinkel immer auf einen auch wirksamen Wert festgelegt werden, wobei dieser Wert erst zum Tragen kommt, wenn die entsprechende Regelung aktiviert wird. Alternativ könnte auch der Differenzwinkel einen so großen Wert annehmen, dass der Grenzwinkel nie um einen solchen Differenzwinkel unterschritten wird. Ansonsten kann der Differenzwinkel beispielsweise im Bereich von 5° liegen, was weiter unten noch erläutert wird.

Anstatt oder zusätzlich
- eine vorbestimmte Böigkeit des Windes wird erreicht,
- eine vorbestimmte Böenhäufigkeit des Windes wird erreicht und
- in einem vorbestimmten Zeitraum wird wenigstens einmal eine Spitzendrehzahl erfasst, die um mehr als einen vorbestimmten Toleranzwert oberhalb der Nenndrehzahl liegt.

Gemäß einer weiteren Ausgestaltung wird vorgeschlagen, dass der Grenzwinkel in Abhängigkeit einer erfassten Böigkeit festgelegt wird. Die Größe und/oder die Dynamik eines solchen Grenzwinkels kann somit auch in Abhängigkeit einer erfassten Böigkeit festgelegt werden. Hierbei kommt besonders in Betracht, den Grenzwinkel umso höher zu legen, je böiger der Wind ist. Der beschriebene Effekt kann somit bei besonders starker Böigkeit des Windes, wenn also viele Böen auch mit hoher Amplitude auftreten, was regelmäßig auch entsprechend tiefe Böentäler mit sich bringt, auf einen möglichst hohen Wert eingestellt werden. Ein ähnlicher Effekt kann dadurch erreicht werden, dass der Differenzwinkel in Abhängigkeit der erfassten Böigkeit festgelegt wird. Der Differenzwinkel wäre also auch vom Betrag her besonders klein zu wählen, wenn eine besonders starke Böigkeit mit hohen Böenamplituden und auch Böentälern mit sehr geringen Windgeschwindigkeiten aufweist.

Vorzugsweise wird der vorbestimmte Differenzwinkel einen Wert aufweisen, der ausgewählt ist aus der Liste, die einen Wertebereich von 0 bis 10°, 3 bis 8° und einen Wert von 5° aufweist. Der Differenzwinkel liegt also vorzugsweise in einem Bereich von 0 bis 10°, besonders in einem Bereich von 3 bis 8° und insbesondere weist er einen Wert von etwas 5° auf.

Besonders dann, wenn der Grenzwinkel etwa dem zuletzt eingestellten, großen Wert des Blattwinkels entspricht, wird durch einen Wert von etwa 5° erreicht, dass sich der Blattwinkel nicht weit von dem letzten Wert entfernt. Tritt also die beschriebene Flaute bzw. das beschriebene Böental auf und würde der Winkel dann ohne diese Beschränkung durch den Grenzwinkel sehr stark zurückgedreht werden, beispielsweise um 20 oder 30°, würde hier die Beschränkung auf etwa 5° diese große Differenz verhindern und der Winkel ist dann beim Wiederauftreten einer Böe nicht sehr weit weg von dem Winkel, der dann eingestellt werden müsste.

Anstelle eines Wertes von etwa 5° kann auch ein Wert im Bereich von 3 bis 8° gewählt werden. Auch dadurch ist noch eine gute Beschränkung durch einen solchen Differenzwinkel erzielbar. Auch ein Bereich von 0 bis 10° kommt in Betracht. 10° ist insoweit schon ein großer Wert für den Differenzwinkel, der aber eventuell noch ausreichen kann, in jedem Fall ein deutlich kleinerer Wert ist im Vergleich zu den oben beispielhaft genannten Abweichungen von 20 oder 30°. Eine Untergrenze von 0° für den Differenzwinkel wird vorgeschlagen, so dass zum Wirksamwerden der Beschränkung des Blattwinkels nach unten zumindest der Grenzwinkel erreicht werden müsste.

Davon abgesehen könnte natürlich rein rechnerisch der Grenzwinkel auch um einen willkürlichen Wert verändert werden und der Differenzwinkel um diesen willkürlichen Wert in gleicher Weise angepasst werden. Das wird erfindungsgemäß zwar nicht vorgeschlagen, würde im Ergebnis aber auf dasselbe hinauslaufen und somit im Ergebnis die erfindungsgemäße Lehre realisieren. Wird also beispielsweise, bezogen auf einen Augenblick, ein Grenzwinkel von 20° festgelegt und ein Differenzwinkel von 5° gewählt, so darf in diesem Moment der Blattwinkel nicht unter 15° abfallen.

Erfindungsgemäß wird vorgeschlagen, dass der Grenzwinkel als Mittelwert oder gefilterter Wert der zuletzt eingestellten Blattwinkel ermittelt wird. Etwas vereinfacht ausgedrückt nimmt der Grenzwinkel etwa den letzten eingestellten Blattwinkelwert an, verändert sich aber wesentlich träger. Hierbei liegt die Idee zugrunde, dass durch einen so gewählten Grenzwinkel zusammen mit einem Differenzwinkel, der größer als Null ist, der Blattwinkel nicht stärker als um diesen Differenzwinkel von diesem etwa seinem letzten Wert entsprechenden Wert abweicht.

Die träge Veränderung kann hierbei beispielsweise durch eine Mittelwertbildung erfolgen, indem über die letzten 8 Sek die in dieser Zeit eingestellten Blattwinkel gemittelt werden. Fällt nun der Wind stark ab und versucht die Steuerung den Blattwinkel entsprechend stark zu verringern, wird dies schnell an die Grenze stoßen, die sich aus Grenzwinkel und Differenzwinkel ergibt. Der Grenzwinkel wird aber langsam diesem zumindest etwas reduzierten Blattwinkel folgen, so dass sich der Grenzwinkel auch verringert, allerdings sehr langsam. Dadurch kann erreicht werden, dass in dem beschriebenen Böental, das nicht sehr lange anhalten dürfte, keine starke Verringerung des Blattwinkels und auch des Grenzwinkels erfolgen kann, weil dafür die Zeitdauer des Böentals zu kurz ist. Sollte der Wind allerdings dauerhaft auf einem geringen Wert bleiben, kann sich auch der Grenzwinkel entsprechend verringern und der Blattwinkel auch letztlich einen entsprechend geringen Wert annehmen, der der dann vorherrschenden schwachen Windgeschwindigkeit angemessen ist. Ist die Windgeschwindigkeit nämlich länger anhaltend niedrig, so ist auch nicht mehr mit einer plötzlichen Böe zu rechnen und entsprechend darf sich die Anlage in ihrem Blattwinkel auch von einem Blattwinkel um einen großen Wert entfernen, der für eine starke Böe bzw. anderweitig hohe Windgeschwindigkeit notwendig wäre.

Ein ähnliches träges Verhalten des Grenzwinkels, angelehnt an die letzten eingestellten Blattwinkel, ist durch eine entsprechende Filterung zu erreichen, besonders durch ein Tiefpassverhalten. Eine einfache und effiziente Möglichkeit einer solchen Filterung ist die Verwendung eines Verzögerungsgliedes erster Ordnung. Der Grenzwinkel wäre dann der Ausgang eines solchen Verzögerungsgliedes erster Ordnung, das als Eingang den aktuellen Blattwinkel hat.

Vorzugsweise werden verschiedene Möglichkeiten einer Grenzwinkelbestimmung vorgeschlagen, nämlich eine Mittelwertbildung der zuletzt eingestellten Blattwinkel über einen Zeitraum einer Länge von 5 bis 20 Sek, vorzugsweise über einen Zeitraum einer Länge von 6 bis 15 Sek, insbesondere über einen Zeitraum einer Länge von etwa 8 Sek. Auch hierdurch können entsprechende Zeitkonstanten eingestellt werden, die sich durch die vorgeschlagenen Bereiche bzw. den vorgeschlagenen Wert für die Länge der Mittelungszeiträume einstellen. Durch die Wahl einer Mittelungslänge im Bereich von 5 bis 20 Sek können Anforderungen erfüllt werden, die einerseits eine ausreichende Trägheit für die Veränderung des Grenzwinkels erreichen, dass der Blattwinkel nicht zu schnell zu stark abfällt und im Falle einer wiederkehrenden Böe dann nicht schnell genug auf den gewünschten hohen Wert gedreht werden könnte. Andererseits wird aber auch vermieden, dass das Verhalten zu träge ist und damit die Leistungsfähigkeit der Windenergieanlage durch eine zu schlechte Regelung leidet. Die Wahl des Zeitraums zur Mittelung aus dem Bereich von 6 bis 15 Sek berücksichtigt diese beiden Kriterien noch stärker. Die Wahl eines Zeitraums von etwa 8 Sek kann als guter Wert angenommen werden, der beide Kriterien gut berücksichtigt.

Ebenso kann eine Tiefpassfilterung vorgesehen sein, die besonders bei Verwendung eines Tiefpasses erster Ordnung Zeitkonstanten im Bereich von 5 bis 20 Sek wählt, vorzugsweise im Bereich von 6 bis 15 Sek und insbesondere eine Zeitkonstante von etwa 8 Sek wählt. Die vorteilhafte Wirkung ergibt sich aus denselben Erläuterungen, die zur Wahl der Mittelungslänge zur Mittelwertbildung gegeben wurde.

Die Verwendung eines Tiefpassfilters erster Ordnung, insbesondere ein sogenanntes PT1-Verhalten bzw. VZ1-Verhalten, ist vorteilhaft, weil ein solches Verhalten überschwingungsfrei ist. Gleichwohl können bei ähnlicher Zeitkonstantenwahl, auch Tiefpassfilter höherer Ordnung verwendet werden. Die übrigen Parameter sollten vorzugsweise so gewählt werden, dass der Filter nicht zum Überschwingen neigt. Ein Tiefpass erster Ordnung bzw. eine Mittelwertbildung dürften aber üblicherweise ausreichend sein.

Gemäß einer Ausführungsform wird vorgeschlagen, dass der Grenzwinkel und außerdem oder alternativ der Differenzwinkel in Abhängigkeit einer Böenhäufigkeit eingestellt wird. Darunter ist ein Maß zu verstehen, das angibt, wie oft eine Böe in einem vorbestimmten Zeitintervall auftritt. Ist diese Böenhäufigkeit etwa bekannt, kann gut abgeschätzt werden, wie stark das oben beschriebene Phänomen der schnellen Wiederkehr einer Böe nach einem Böental auftritt. Ist dieses Verhalten schwächer ausgebildet, ist also mit einer weniger starken Böenrückkehr nach einem Böental zu rechnen, so kann der Differenzwinkel größer ausfallen. Es kann also eine stärkere oder schnellere Veränderung des Blattwinkels zugelassen werden. Auch hier kommt es auf das Zusammenspiel von Grenzwinkel und Differenzwinkel an. Es kann beispielsweise der Grenzwinkel unverändert festgestellt werden, aber nur der Differenzwinkel in Abhängigkeit der Böenhäufigkeit eingestellt werden. Andererseits kann stattdessen der Grenzwinkel in Abhängigkeit einer Böenhäufigkeit eingestellt werden. Hier kommt insbesondere in Betracht, eine Zeitkonstante oder eine Zeitdauer des Mittelungszeitraums bei Mittelwertbildung für den Grenzwinkel abhängig einer Böenhäufigkeit einzustellen. Dabei ist der Zeitraum für die Mittelwertbildung bzw. die Zeitkonstante des Tiefpassfilters je größer einzustellen, je höher die Böenhäufigkeit ist.

Ebenso kann sowohl das Festlegen des Grenzwinkels als auch das Vorbestimmen des Differenzwinkels in Abhängigkeit der Böenhäufigkeit, aber zueinander koordiniert vorgenommen werden.

Gemäß einer Ausführungsform wird davon ausgegangen, dass im Teillastbetrieb für den Blattwinkel ein fester Teillastwinkel vorgesehen ist. Hierfür wird vorgeschlagen, dass der Grenzwinkel oder der Grenzwinkel abzüglich des Differenzwinkels nicht kleiner als dieser Teillastwinkel wird. Der Blattwinkel wird üblicherweise ohnehin nicht kleiner als der Teillastwinkel eingestellt und insoweit wurde es als zweckmäßig erkannt, auch den Grenzwinkel bzw. den Grenzwinkel abzüglich des Differenzwinkels hierauf zu beschränken.

Gemäß einer Ausführungsform wird vorgeschlagen, dass der Grenzwinkel mit der Zeit und/oder mit einem Gradienten in Abhängigkeit der Zeit abfällt, insbesondere linear abfällt. Hierdurch kann ein ähnlicher Effekt erreicht werden wie bei der Einstellung des Grenzwinkels durch eine Mittelwertbildung oder eine Tiefpassfilterung, wie oben beschrieben wurde. Durch diesen Abfall mit der Zeit, der über einen Gradienten in Abhängigkeit der Zeit vorgegeben werden kann, wird erreicht, dass zunächst ein Grenzwinkel gewählt werden kann, der verhindert, dass der Blattwinkel nach einer Böe zu stark verringert wird. Hält aber eine geringe Windgeschwindigkeit lange an, soll dann nach einer gewissen Zeit auch der Blattwinkel entsprechend reduziert werden können. Das kann durch diese vorgeschlagene Änderung des Grenzwinkels über die Zeit und/oder mit einem zeitlichen Gradienten erreicht werden.

Erfindungsgemäß wird auch eine Windenergieanlage vorgeschlagen, die wenigstens ein verstellbares Rotorblatt aufweist, vorzugsweise drei verstellbare Rotorblätter aufweist und entsprechend auch eine Steuerung zum Verstellen dieses Rotorblattes bzw. dieser Rotorblätter aufweist. Die Steuerung ist dabei erfindungsgemäß dazu vorbereitet, ein Verfahren gemäß wenigstens einem der vorstehend erläuterten Ausführungsformen auszuführen. Diese Vorbereitung der Steuerung kann insbesondere dadurch realisiert sein, dass ein entsprechendes Verfahren in einem Steuerprogramm programmiert ist.

Somit wird eine Windenergieanlage vorgeschlagen, die über einen effizienten Schutz verfügt, der verhindert, dass bei einem starken Wechsel von Böe in Flaute bzw. Böental und wieder Böe versehentlich eine Überdrehzahl auftritt und die Windenergieanlage notabgeschaltet werden muss, obwohl kein Fehler in der Drehzahlregelung vorliegt. Durch das vorgeschlagene Verfahren wird nämlich verhindert, dass eine solche Überdrehzahl trotz funktionierender Regelung auftritt.

Nachfolgend wird die Erfindung beispielhaft unter Bezugnahme auf die begleitenden Figuren näher erläutert.
- Figur 1: zeigt eine Windenergieanlage in einer perspektivischen Ansicht.
- Figur 2: zeigt ein schematisches Diagramm das Zusammenhänge zwischen Drehzahl, Windgeschwindigkeit und Blattwinkel veranschaulichen soll.

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

In Figur 2 sind über die Zeit die Windgeschwindigkeit V_{Wind}, Der Blattwinkel α und die Rotordrehzahl n aufgetragen. Die Achsbeschriftung der Ordinaten gibt zwar die Einheiten für die entsprechenden Größen an, auf die exakten Werte kommt es aber für diese grundsätzlichen Erläuterungen nicht an.

Neben dem tatsächlichen Blattwinkel α ist auch der mögliche Verlauf eines Grenzwinkels α_{G} sowie ein Verlauf des Grenzwinkels α_{G} abzüglich eines Differenzwinkels Δα eingezeichnet und wird dort bezeichnet als α_{G}-Δα. Außerdem sind zwei gepunktete Teilverläufe dargestellt, nämlich ein modifizierter Winkel α_{mod}, der angibt, wie der Blattwinkel erfindungsgemäß verlaufen sollte, und eine Drehzahl n_{mod}, die dazu die resultierende Drehzahl veranschaulicht.

Bei der Darstellung der Figur 2 wird angenommen, dass die Windgeschwindigkeit zum Zeitpunkt T₁ ansteigt und dann eine Böe vorliegt. Mit dem Anstieg der Windgeschwindigkeit steigt ebenfalls zunächst die Drehzahl n an. Um dem entgegenzuwirken, wird auch der Blattwinkel α erhöht. Es ist zu erkennen, dass der Blattwinkel α auch vor dem Zeitpunkt T₁ leicht schwanken kann, um die Drehzahl n etwa konstant zu halten. Insoweit gelingt das Konstanthalten der Drehzahl n vor dem Zeitpunkt T₁ auch ganz gut. Die unmittelbar nach dem Zeitpunkt T1 auftretende Böe führt aber zu einem merklichen Anstieg der Drehzahl n.

Zusätzlich zum Verlauf des Winkels α ist dort auch der Grenzwinkel α_{G} zu erkennen, der einen Mittelwert des Winkels α bildet. Entsprechend ändert sich der Verlauf des Grenzwinkels α_{G} vergleichsweise wenig.

Außerdem ist zu dem Grenzwinkel α_{G} der Differenzwinkel Δα eingezeichnet. Der Grenzwinkel α_{G} darf maximal um den Differenzwinkel Δα unterschritten werden. Entsprechend ergibt sich eine einzuhaltende Grenze, die als α_{G}- Δα eingezeichnet ist. Diese beginnt kurz nach dem Zeitpunkt T₁ und dieser Beginn ist mit "Start" gekennzeichnet. Hier wurde nun detektiert, dass eine gewisse Böigkeit des Windes vorliegt und somit wurde der Differenzwinkel Δα aktiv geschaltet. Der Grenzwinkel α_{G} wird in diesem Beispiel immer aufgenommen, nämlich als Mittelwert des Winkels a. Damit, dass der Differenzwinkel Δα nun Anwendung findet, wird auch die entsprechende Regelung aktiv geschaltet, die überprüft, ob eingehalten wird, dass der Grenzwinkel α_{G} maximal um den Differenzwinkel Δα unterschritten wird.

Mit fortschreitender Zeit ist dann die Böe vorüber und die Windgeschwindigkeit V_{Wind} hat etwa wieder den Wert vor dem Zeitpunkt T₁ angenommen. Die Drehzahl n konnte inzwischen auch auf ihren Anfangswert, nämlich Nenndrehzahl n_{N} geregelt werden. Auch der Blattwinkel α hat sich wieder entsprechend auf einen Wert wie etwa vor dem Zeitpunkt T₁ reduziert. Es sind noch Schwankungen zu erkennen, die unvermeidbar sind, weil auch der Wind leicht schwankt. Diese Schwankungen sind in dem Grenzwinkel α_{G}, der wie gesagt einen Mittelwert dieses Blattwinkels α bildet, kaum noch zu erkennen.

Zum Zeitpunkt T₂ beginnt die Windgeschwindigkeit abzufallen. Ob dies der Beginn einer grundsätzlich nachlassenden Windgeschwindigkeit oder ein Böental ist, ist nicht erkennbar. Jedenfalls fällt die Windgeschwindigkeit vergleichsweise stark ab, so dass die Drehzahl n sich auch zunächst reduziert. Der Blattwinkel α reduziert sich ebenfalls, um nun die Drehzahl n möglichst zu halten, nämlich dem Abfall der Drehzahl n entgegenzuwirken.

Der Grenzwinkel α_{G} folgt diesem Verlauf des Blattwinkels α aufgrund der Mittelung zunächst nur schwach.

Die Windgeschwindigkeit V_{Wind} fällt aber weiter ab und der Blattwinkel α erreicht dann zum Zeitpunkt T₃ einen Wert, der um den Differenzwinkel Δα unter dem Grenzwinkel α_{G} liegt. An dieser Stelle würde nun die vorgeschlagene Regelung ansetzen.

Die Figur 2 zeigt jedoch mit dem durchgezogenen Verlauf des Winkels α und auch dem durchgezogenen Verlauf der Drehzahl n einen Verlauf, der sich ohne Anwendung der vorgeschlagenen Regelung einstellen würde. Demnach würde der Blattwinkel α immer weiter abfallen, bis zum Zeitpunkt T₄ die Drehzahl n auf die Ursprungsdrehzahl eingeregelt werden konnte, nämlich auf die Nenndrehzahl n_{N}. Es wird hier vorsorglich darauf hingewiesen, dass auch diese Annahmen der Veranschaulichung dienen und es durchaus auch sein könnte, dass die Windgeschwindigkeit dann so stark abfällt, dass die Windenergieanlage im Teillastbetrieb ist und die Drehzahl n mangels Wind gar nicht auf Nenndrehzahl n_{N} halten kann. Zur Veranschaulichung wird aber davon ausgegangen, dass sich der beschriebene Vorgang vollständig im Volllastbetrieb bzw. für Windgeschwindigkeiten abspielt, die üblicherweise im Volllastbetrieb angesiedelt sind.

Somit ist es nun gemäß der durchgezogenen Linie des Blattwinkels α und der Drehzahl n möglich, die Drehzahl n auf ihrem Nennwert n_{N} zu halten.

Zum Zeitpunkt T₅ steigt nun die Windgeschwindigkeit wieder stark an. Das kann bei böiger Windgeschwindigkeit typisch sein. Entsprechend steigt auch die Drehzahl n an und der Blattwinkel α steigt ebenfalls wieder an, um diesem Anstieg der Drehzahl n entgegenzuwirken.

Es liegt nun hier die besondere Situation vor, dass die Windgeschwindigkeit zunächst vergleichsweise gering ist und der Blattwinkel α auch vergleichsweise gering ist, die Drehzahl n gleichwohl den Nennwert hat und damit auch nicht weit entfernt von der Grenzdrehzahl n_{MAX} ist. Durch diesen nun schnell ansteigenden Wind steigt auch die Drehzahl in einem Maße an, dass die Steuerung des Blattwinkels es nicht schafft, die Drehzahl ausreichend vor einem zu starken Anstieg zu bewahren. Somit erreicht die Drehzahl n dann zum Zeitpunkt T₆ den Maximalwert der Drehzahl nₘₐₓ und somit müsste zum Zeitpunkt T₆ eine Notabschaltung durchgeführt werden und diese würde üblicherweise auch durchgeführt werden, weil es ein Sicherheitsaspekt ist, der nicht ausgeschlossen werden kann.

Zum Zwecke der Veranschaulichung zeigt die Figur 2 aber den weiteren Verlauf der Drehzahl n, so als wäre diese Notabschaltung deaktiviert. Entsprechend ist zu erkennen, dass die Drehzahl n noch etwas weiter ansteigt, dann aber, weil der Blattwinkel α ebenfalls weiter ansteigt, schließlich doch ausgeregelt werden kann, unter die maximale Drehzahl nₘₐₓ abgesenkt werden kann und schließlich auch auf den Wert der Nenndrehzahl n_{N} geregelt werden kann.

Wird das Verfahren nun unter Verwendung der vorgeschlagenen Regelung durchgeführt, so wird zum Zeitpunkt T₃ nicht zugelassen werden, dass der Blattwinkel α unter diesen Wert von α_{G}-Δα absinkt. Dieser abweichende Verlauf ist dort gepunktet dargestellt. Diese gepunktete Linie verläuft somit zunächst entlang der Grenze α_{G}-Δα. Das Resultat davon ist zunächst, dass die Drehzahl n_{mod} stärker abfällt als dies ohne diese Regelung der Fall wäre. Auch zum Zeitpunkt T₄ ist diese Drehzahl n_{mod} noch deutlich geringer als die Drehzahl n ohne diese vorgeschlagene Schutzregelung. Auch zum Zeitpunkt T₅ ist diese Drehzahl n_{mod} noch deutlich geringer als die Drehzahl n.

Zum Zeitpunkt T₅, wenn also der Wind nun stark ansteigt, steigt dann auch der Blattwinkel, nämlich α_{mod} stark an. Dieser Blattwinkel α_{mod} ist somit bereits größer als der normale Blattwinkel a. Entsprechend stark kann die Drehzahl n_{mod} geregelt und von einem zu hohen Anstieg abgehalten werden. Dabei kommt in vorteilhafter Weise hinzu, dass die Drehzahl n_{mod} zudem auch geringer als die Drehzahl n ist. Der Blattwinkel ist also größer als für den Fall ohne diese schützende Regelung und die Drehzahl ist kleiner als für den Fall ohne schützende Regelung.

Somit verlässt dieser modifizierte Blattwinkel α_{mod} zum Zeitpunkt T₅ die Grenzkennlinie α_{G}-Δα nach oben.

Zum Zeitpunkt T₆ liegt für diesen Verlauf bei Verwendung der schützenden Regelung keine Besonderheit vor. Es ist aber zu erkennen, dass die modifizierte Drehzahl n_{mod} die Grenzdrehzahl n_{MAX} nicht erreicht und somit eine Abschaltung vermieden wird.

Es ist auch noch darauf hinzuweisen, dass der Grenzwinkel α_{G} auch ab dem Zeitpunkt T₃ vergleichsweise flach abfällt, weil er sich dabei an dem Verlauf des Ist-Winkels gemäß modifiziertem Blattwinkel α_{mod} orientiert.

Schließlich ist in der Drehzahlkennlinie noch ein schraffierter Bereich eingezeichnet, nämlich der Bereich zwischen dem Drehzahlverlauf ohne schützende Regelung und dem Drehzahlverlauf n_{mod} mit schützender Regelung. Dieser schraffierte Bereich soll die Leistungseinbuße veranschaulichen, die durch die schützende Regelung entstehen kann. Dabei ist zu beachten, dass dies nur der Veranschaulichung dient und tatsächlich eine Notabschaltung zum Zeitpunkt T₆ erfolgen würde. Dann fiele natürlich auch der schraffierte Bereich nach diesem Zeitpunkt T₆ weg bzw. es müsste vielmehr ein schraffierter Bereich unterhalb der gepunkteten Drehzahlkennlinie n_{mod} bis hinunter zur Zeitachse gezeichnet werden. Es ist also leicht erkennbar, dass die vermeintliche Leistungseinbuße gering ist und im Vergleich mit dem Fall, dass eine Notabschaltung tatsächlich verhindert werden konnte, ohnehin nicht negativ ist. Rein vorsorglich wird darauf hingewiesen, dass dieser schraffierte Bereich nur der Anschauung dient und natürlich die Integration der Drehzahl über die Zeit bereits in Bezug auf Einheiten keine Leistung ergibt.

Somit konnte auf einfache und Weise eine Lösung vorgeschlagen werden, ein unerwünschtes Notabschalten bei Überdrehzahl zu verhindern. Dazu brauchte keinerlei Hardwareanpassung vorgenommen zu werden. Insbesondere brauchten keine stärkeren Pitchmotoren eingesetzt werden. Die vorgeschlagene Regelung benötigt weder zusätzliche Messgrößen noch zusätzliche Stellgrößen.

## Patentansprüche

1. Verfahren zum Steuern einer Windenergieanlage mit Rotorblättern mit verstellbarem Blattwinkel (a),
umfassend die Schritte
- Betreiben der Windenergieanlage in einem Teillastbetrieb für Windgeschwindigkeiten bis zu einer Nennwindgeschwindigkeit,
- Betreiben der Windenergieanlage in einem Volllastbetrieb für Windgeschwindigkeiten oberhalb der Nennwindgeschwindigkeit, wobei im Vollastbetrieb der Blattwinkel (α) mit zunehmender Windgeschwindigkeit vergrößert wird,
- Festlegen eines Grenzwinkels (α_{G}), der als Mittelwert oder gefilterter Wert der zuletzt eingestellten Blattwinkel (α) ermittelt wird, und
- Steuern der Windenergieanlage so, dass der Blattwinkel (α) den Grenzwinkel (α_{G}) maximal um einen vorbestimmten Differenzwinkel (Δα), der unterschiedliche Werte annehmen kann, unterschreitet, um zu verhindern, dass eine Notabschaltung ausgelöst wird.

2. Verfahren nach Anspruch 1, **dadurch gekennzeichnet, dass**
- das Festlegen des Grenzwinkels (α_{G}) und/oder
- das Steuern der Windenergieanlage so, dass der Grenzwinkel (α_{G}) nur um einen vorbestimmten Differenzwinkel (Δα) unterschritten wird,
erst erfolgt, wenn wenigstens eine Bedingung auftritt, aus der Liste bestehend aus
- eine vorbestimmte Böigkeit des Windes wird erreicht,
- eine vorbestimmte Böenhäufigkeit des Windes wird erreicht und
- in einem vorbestimmten Zeitraum wird wenigstens einmal eine Spitzendrehzahl erfasst, die um mehr als einen vorbestimmten Toleranzwert oberhalb der Nenndrehzahl liegt.

3. Verfahren nach Anspruch 1 oder 2, **dadurch gekennzeichnet, dass** der Grenzwinkel (α_{G}) und/oder der Differenzwinkel (Δα) in Abhängigkeit einer erfassten Böigkeit festgelegt wird.

4. Verfahren nach einem der vorstehenden Ansprüche, **dadurch gekennzeichnet, dass** der vorbestimmte Differenzwinkel (Δα) einen Wert aufweist, ausgewählt aus der Liste bestehend aus:
- einem Wertebereich von 0 bis 10°,
- einem Wertebereich von 3 bis 8° und
- einem Wert von etwa 5°.

5. Verfahren nach einem der vorstehenden Ansprüche, **dadurch gekennzeichnet, dass** der Grenzwinkel (α_{G}) durch eine Grenzwinkelbestimmung aus zuletzt eingestellten Blattwinkeln (α) bestimmt wird und die Grenzwinkelbestimmung ein Verfahren ist, ausgewählt aus der Liste bestehend aus:
- einer Mittelwertbildung der zuletzt eingestellten Blattwinkel (α) über einen Zeitraum einer Länge von 5 bis 20 Sek,
- einer Mittelwertbildung der zuletzt eingestellten Blattwinkel (α) über einen Zeitraum einer Länge von 6 bis 15 Sek,
- einer Mittelwertbildung der zuletzt eingestellten Blattwinkel (α) über einen Zeitraum einer Länge von etwa 8 Sek,
- einer Tiefpassfilterung der zuletzt eingestellten Blattwinkel (α),
- einer Tiefpassfilterung der zuletzt eingestellten Blattwinkel (α) mit einem Tiefpass erster Ordnung mit einer Zeitkonstanten im Bereich von 5 bis 20 Sek,
- einer Tiefpassfilterung der zuletzt eingestellten Blattwinkel (α) mit einem Tiefpass erster Ordnung mit einer Zeitkonstanten im Bereich von 6 bis 15 Sek und
- einer Tiefpassfilterung mit einem Tiefpass erster Ordnung mit einer Zeitkonstanten von etwa 8 Sek.

6. Verfahren nach einem der vorstehenden Ansprüche, **dadurch gekennzeichnet, dass** der Grenzwinkel (α_{G}) und/oder der Differenzwinkel (Δα) in Abhängigkeit einer Böenhäufigkeit eingestellt wird.

7. Verfahren nach einem der vorstehenden Ansprüche, **dadurch gekennzeichnet, dass** im Teillastbetrieb für den Blattwinkel (α) ein fester Teillastwinkel vorgesehen ist und der Grenzwinkel (α_{G}) oder der Grenzwinkel (α_{G}) abzüglich des Differenzwinkels (Δα) nicht kleiner als der Teillastwinkel ist.

8. Verfahren nach einem der vorstehenden Ansprüche, **dadurch gekennzeichnet, dass** der Grenzwinkel (α_{G}) mit der Zeit und/oder mit einem Gradienten in Abhängigkeit der Zeit abfällt, insbesondere linear abfällt.

9. Windenergieanlage mit wenigstens einem verstellbaren Rotorblatt und einer Steuerung zum Verstellen des wenigstens einen Rotorblattes, wobei die Steuerung dazu vorbereitet ist, ein Verfahren gemäß einem der vorstehenden Ansprüche auszuführen, insbesondere, dass ein solches Verfahren in einem Steuerprogramm programmiert ist.

## Claims

1. A method for controlling a wind turbine having rotor blades with an adjustable blade angle (a),
comprising the following steps
- operating the wind turbine in a part-load operation for wind speeds up to a rated wind speed,
- operating the wind turbine in a full-load operation for wind speeds above the rated wind speed, with the blade angle (α) being increased in full-load operation with increasing wind speed,
- setting a limit angle (α_{G}), which is ascertained as a mean value or a filtered value of the last set blade angles (a), and
- controlling the wind turbine in such a way that the blade angle (α) undershoots the limit angle (α_{G}) by at most a predetermined difference angle (Δα), which can assume different values, in order to prevent an emergency shutdown from being triggered.

2. The method as claimed in claim 1, **characterized in that**
- setting of the limit angle (α_{G}) and/or
- controlling the wind turbine in such a way that the limit angle (α_{G}) is undershot only by a predetermined difference angle (Δα)
is only effectuated if at least one condition from the list consisting of the following occurs:
- a predetermined gustiness of the wind is reached
- a predetermined gust frequency of the wind is reached and
- a peak rotational speed, which lies above the rated rotational speed by more than a predetermined tolerance value, is captured at least once within a predetermined period of time.

3. The method as claimed in claim 1 or 2, **characterized in that** the limit angle (α_{G}) and/or the difference angle (Δα) is set depending on a captured gustiness.

4. The method as claimed in one of the preceding claims, **characterized in that** the predetermined difference angle (Δα) has a value that is selected from the list consisting of:
- a value range from 0 to 10°,
- a value range from 3 to 8° and
- a value of approximately 5°.

5. The method as claimed in any one of the preceding claims, **characterized in that** the limit angle (α_{G}) is determined by determining a limit angle from last set blade angles (α) and determining a limit angle is a method selected from the list consisting of:
- forming a mean value of the last set blade angles (α) over a period of time with a length of 5 to 20 seconds,
- forming a mean value of the last set blade angles (α) over a period of time with a length of 6 to 15 seconds,
- forming a mean value of the last set blade angles (α) over a period of time with a length of approximately 8 seconds,
- low-pass filtering of the last set blade angles (α),
- low-pass filtering of the last set blade angles (α) with a first-order low-pass filter having a time constant in the range of 5 to 20 seconds,
- low-pass filtering of the last set blade angles (α) with a first-order low-pass filter having a time constant in the range of 6 to 15 seconds, and
- low-pass filtering with a first-order low-pass filter having a time constant of approximately 8 seconds.

6. The method as claimed in any one of the preceding claims, **characterized in that** the limit angle (α_{G}) and/or the difference angle (Δα) is set depending on a gust frequency.

7. The method as claimed in any one of the preceding claims, **characterized in that** a fixed part-load angle is provided for the blade angle (α) during the part-load operation and the limit angle (α_{G}) or the limit angle (α_{G}) minus the difference angle (Δα) is not smaller than the part-load angle.

8. The method as claimed in any one of the preceding claims, **characterized in that** the limit angle (α_{G}) decreases over time and/or decreases with a gradient that is dependent on time, in particular decreases linearly.

9. A wind turbine having at least one adjustable rotor blade and a controller for adjusting the at least one rotor blade, wherein the controller is prepared to implement a method as claimed in any one of the preceding claims, in particular that such a method is programmed in a control program.

## Revendications

1. Procédé pour commander une éolienne avec des pales de rotor à angle de pale (α) réglable, comprenant les étapes
- de fonctionnement de l'éolienne dans un fonctionnement en charge partielle pour des vitesses de vent allant jusqu'à une vitesse de vent nominale,
- de fonctionnement de l'éolienne dans un fonctionnement en pleine charge pour des vitesses de vent au-dessus de la vitesse de vent nominale, dans lequel dans le fonctionnement en pleine charge l'angle de pale (α) est augmenté à mesure que la vitesse de vent augmente,
- de fixation d'un angle limite (α_{G}), qui est déterminé en tant que valeur moyenne ou valeur filtrée des angles de pale (α) réglés en dernier, et
- de commande de l'éolienne, de sorte que l'angle de pale (α) passe au-dessous de l'angle limite (α_{G}) au maximum d'un angle différentiel (Δα) prédéfini, qui peut prendre des valeurs différentes, afin d'empêcher qu'un arrêt d'urgence soit déclenché.

2. Procédé selon la revendication 1, **caractérisé en ce que**
- la fixation de l'angle limite (α_{G}) et/ou
- la commande de l'éolienne, de sorte que l'angle limite (α_{G}) ne soit pas atteint que d'un angle différentiel (Δα) prédéfini,
ne s'effectue que lorsqu'au moins une condition apparaît, à partir de la liste constituée de
- des rafales prédéfinies du vent sont atteintes,
- une fréquence de rafales de vent prédéfinie du vent est atteinte et
- dans un laps de temps prédéfini une vitesse de rotation maximale est détectée au moins une fois, qui se situe de plus d'une valeur de tolérance prédéfinie au-dessus de la vitesse de rotation nominale.

3. Procédé selon la revendication 1 ou 2, **caractérisé en ce que** l'angle limite (α_{G}) et/ou l'angle différentiel (Δα) est fixé en fonction de rafales détectées.

4. Procédé selon l'une quelconque des revendications précédentes, **caractérisé en ce que** l'angle différentiel (Δα) prédéfini présente une valeur, sélectionnée dans la liste constituée de :
- une plage de valeurs de 0 à 10°,
- une plage de valeurs de 3 à 8° et
- une valeur d'environ 5°.

5. Procédé selon l'une quelconque des revendications précédentes, **caractérisé en ce que** l'angle limite (α_{G}) est déterminé par une détermination d'angle limite à partir d'angles de pale (α) réglés en dernier et la détermination d'angle limite est un procédé sélectionné dans la liste constituée de :
- une formation de moyenne des angles de pale (α) réglés en dernier pendant un laps de temps d'une longueur de 5 à 20 sec,
- une formation de moyenne des angles de pale (α) réglés en dernier pendant un laps de temps d'une longueur de 6 à 15 sec,
- une formation de moyenne des angles de pale (α) réglés en dernier pendant un laps de temps d'une longueur de sensiblement 8 sec,
- un filtrage passe-bas des angles de pale (α) réglés en dernier,
- un filtrage passe-bas des angles de pale (α) réglés en dernier avec un filtre passe-bas de premier ordre avec une constante de temps dans la plage de 5 à 20 sec,
- un filtrage passe-bas des angles de pale (α) réglés en dernier avec un filtre passe-bas de premier ordre avec une constante de temps dans la plage de 6 à 15 sec et
- un filtrage passe-bas avec un filtre passe-bas de premier ordre avec une constante de temps de sensiblement 8 sec.

6. Procédé selon l'une quelconque des revendications précédentes, **caractérisé en ce que** l'angle limite (α_{G}) et/ou l'angle différentiel (Δα) sont réglés en fonction d'une fréquence de rafales.

7. Procédé selon l'une quelconque des revendications précédentes, **caractérisé en ce que** dans le fonctionnement en charge partielle pour l'angle de pale (α) un angle de charge partielle fixe est prévu et l'angle limite (α_{G}) ou l'angle limite (α_{G}) moins l'angle différentiel (Δα) n'est pas inférieur à l'angle de charge partielle.

8. Procédé selon l'une quelconque des revendications précédentes, **caractérisé en ce que** l'angle limite (α_{G}) diminue avec le temps et/ou avec un gradient en fonction du temps, en particulier diminue de manière linéaire.

9. Eolienne avec au moins une pale de rotor réglable et une commande pour régler la au moins une pale de rotor, dans laquelle la commande est préparée à mettre en œuvre un procédé selon l'une quelconque des revendications précédentes, en particulier qu'un tel procédé est programmé dans un programme de commande.
